# EUROPÄISCHE PATENTSCHRIFT

(11) **EP 3 022 006 B1**
(45) Veröffentlichungstag und Bekanntmachung des Hinweises auf die Patenterteilung: **23.09.2020**
(21) Anmeldenummer: 14736672.8
(22) Anmeldetag: 23.06.2014
(51) Int. Cl.: B23K 20/10, B29C 65/08

(54) **SONOTRODE, VERFAHREN ZUR HERSTELLUNG EINER ULTRASCHALLSCHWEISSVERBINDUNG UNTER VERWENDUNG EINER SOLCHEN SONOTRODE, UND SCHWEISSVORRICHTUNG ZUR DURCHFÜHRUNG DES VERFAHRENS UMFASSEND EINE SOLCHE SONOTRODE**
SONOTRODE , METHOD OF PRODUCING AN ULTRASONIC WELD USING SUCH SONOTRODE, WELDING DEVICE FOR CARRYING OUT SAID METHOD COMPRISING SUCH SONOTRODE
SONOTRODE, PROCÉDÉ DE FABRICATION DE SOUDURES PAR ULTRASONS UTILISANT UNE TELLE SONOTRODE, DISPOSITIF DE SOUDAGE POUR MISE EN OEUVRE DU PROCÉDÉ COMPRENANT UNE TELLE SONOTRODE

(30) Priorität: 18.07.2013 DE 102013214134
(43) Veröffentlichungstag der Anmeldung: 25.05.2016
(73) Patentinhaber: Robert Bosch GmbH, 70442 Stuttgart (DE); Novatec GmbH, 65795 Hattersheim (DE)
(72) Erfinder: FINK, Daniel, 65428 Rüsselsheim (DE); KIPPENBROCK, Horst, 48282 Emsdetten (DE)
(86) Internationale Anmeldenummer: PCT/EP2014/063105
(87) Internationale Veröffentlichungsnummer: WO 2015/007457

(56) Entgegenhaltungen:
- EP-A2- 0 140 069
- WO-A1-2011/128118
- DE-A1-102010 003 268
- US-A- 2 985 954

## Beschreibung

Die Erfindung betrifft eine Sonotrode gemäß dem Oberbegriff des Anspruchs 1 (siehe z.B. WO 2011/128118 A1), ein Verfahren zur Herstellung einer Ultraschallschweißverbindung unter Verwendung einer solchen Sonotrode (siehe Anspruch 2), sowie eine Schweißvorrichtung zur Durchführung des Verfahrens nach Anspruch 2, umfassend eine solche Sonotrode (siehe Anspruch 10).

Beim Ultraschallschweißen werden thermoplastische oder metallische Werkstücke formschlüssig miteinander verbunden. Dabei wird die zum Schweißen erforderliche Energie in Form von Ultraschall, also in Form von hochfrequenten mechanischen Schwingungen eingebracht. Dabei wird mit Hilfe eines Generators ein hochfrequenter Wechselstrom erzeugt und mit einem Wandler beziehungsweise Konverter auf eine Sonotrode übertragen. Die Sonotrode liegt mit ihrer Arbeitsfläche an einem ersten Werkstück an, das gegen die Oberfläche eines zweiten Werkstücks gedrückt wird und mit diesem verbunden werden soll. Damit werden die Schwingungen von der Sonotrode auf die zu verbindenden Werkstücke in einer Fügezone übertragen. Hierbei handelt es sich um einen fast kalten Press- bzw. Reibschweißprozess. Die metallische Verbindung wird durch ein mikroskopisches Aufreißen der Oberfläche und das Herausreiben der Oxide aus den Kontaktflächen bewirkt. Durch das Aufeinanderreiben der Metalle mit hoher Frequenz im Ultraschallbereich mit gleichzeitigem Druck auf Kontaktflächen werden so beim Aufreißen der Oxidschichten intermolekulare Verbindungen erzeugt.

Zum Herstellen linearer Schweißnähte kommen rotationssymmetrische Sonotroden, die auch als Rollnaht-Sonotroden bezeichnet werden, zum Einsatz. Während des Schweißvorgangs rotiert dabei die Sonotrode, wobei entweder die zu verbindenden Werkstücke zwischen der sich drehenden Sonotrode und einem dazu synchron rotierenden Andruckrad kontinuierlich hindurch bewegt werden, oder wobei die Sonotrode relativ zu den stationär gehaltenen Werkstücken bewegt wird.

Die Sonotroden mit dem jeweiligen Ultraschallwandler sind in der Regel in Rollnaht-Modulen angeordnet, die einen größeren Durchmesser als die Sonotrode haben. Die Sonotrode ragt dann stirnseitig aus diesem Rollnaht-Modul hervor. Damit die Rollnaht-Module nicht mit flächigen Werkstücken wie beispielsweise einer Absorberfläche kollidieren, werden die Rollnaht-Module dabei üblicherweise in einem Winkel angeordnet, beispielsweise unter einem Winkel von 7°. Dementsprechend ist auch die Arbeitsfläche der Sonotrode in einem entsprechenden Winkel ausgeformt, um eine flächige Anlage an den Werkstücken zu ermöglichen.

Durch eine derartige Ausgestaltung ist es allerdings schwierig bis unmöglich, nah an einem zylindrischen Körper eine Schweißnaht zu erzeugen, da die Sonotrode mit ihrer Stirnfläche an den zylindrischen Körper anstößt und durch die Schrägstellung der Sonotrode einen Abstand zwischen dem zylindrischen Körper und der Sonotrode ein gewisses Mindestmaß nicht unterschreiten kann. Besonders bei größeren Dimensionen beziehungsweise Durchmessern des zylindrischen Körpers kann dieser Abstand dabei relativ groß werden. Bestmögliche Ergebnisse werden bei zylindrischen Körpern mit geringen Abmessungen beziehungsweise Durchmessern bei gleichzeitig großen Durchmessern der Sonotrode erreicht, da dann der Neigungswinkel des Rollnaht-Moduls minimiert werden kann und die Stirnfläche der Sonotrode im Wesentlichen senkrecht mit einer Oberfläche des oder der Werkstücke abschließt. Bei der Befestigung des zylindrischen Körpers über ein Profilblech als erstes, oberes Werkstück kann das Profilblech dann nahezu senkrecht auf das unten liegende Werkstück, beispielsweise ein Absorberblech, gezogen und mit diesem verschweißt werden. Bei größeren Dimensionen des zylindrischen Körpers ist es jedoch nicht möglich, das Profilblech im Wesentlichen senkrecht zum unten liegenden Absorberblech zu ziehen. Vielmehr läuft es dann schräg dazu. Damit verringert sich die Anlagefläche zwischen dem Profilblech und dem zylindrischen Körper und somit die Steifigkeit der Verbindung.

Der Erfindung liegt nun die Aufgabe zugrunde, ein Verfahren zur Herstellung einer Ultraschallschweißverbindung einzugeben, mit dem eine Schweißnaht möglichst nah an einem zylindrischen Körper erzeugt werden kann. Ferner soll eine entsprechende Schweißvorrichtung beziehungsweise eine dafür geeignete Sonotrode angegeben werden.

Diese Aufgabe wird durch eine Sonotrode gemäß Anspruch 1, mit einem Verfahren gemäß Anspruch 2, sowie mit einer Schweißvorrichtung gemäß Anspruch 10 gelöst. Vorteilhafte Ausgestaltungen finden sich in den Unteransprüchen.

Bei einem Verfahren zur Herstellung einer Ultraschallschweißverbindung zum Befestigen eines zylindrischen Körpers auf einer Oberfläche, wobei über eine ringförmige Arbeitsfläche einer rotationssymmetrischen Sonotrode Ultraschallschwingungen in eine Fügezone eingebracht werden, ist erfindungsgemäß vorgesehen, dass der zylindrische Körper von der Sonotrode kontaktlos übergriffen wird. Dabei kann der zylindrische Körper unterhalb einer Auskehlung, die in der Umfangsfläche der Sonotrode ausgebildet ist, angeordnet werden.

Beim Herstellen der Ultraschallschweißverbindung befindet sich der zylindrische Körper also nicht stirnseitig zur Sonotrode, sondern wird von der Sonotrode übergriffen. Durch eine entsprechend große Ausformung der Auskehlung, die zur Aufnahme des zylindrischen Körpers dient, können dabei auch unterschiedlich dimensionierte zylindrische Körper mit der gleichen Sonotrode geschweißt werden. Beispielsweise können kreiszylindrische Körper mit Durchmessern zwischen 6 und 24 mm mit der gleichen Sonotrode befestigt werden. Dabei kann nicht nur ein Übergreifen erfolgen, sondern auch ein Untergreifen, sodass die Schweißnähte sehr nahe am zylindrischen Körper positioniert werden können. Damit wird eine von dem Profilblech umschlungene Fläche des zylindrischen Körpers sehr groß und eine feste Einspannsituation erreicht. Besonders für die Möglichkeit der Anwendung im Bereich eines Wärmetauschers ist hier ein maximaler Kontakt gewünscht und hierdurch ein idealer Wärmeübergang möglich.

Vorzugsweise weist die Sonotrode einen Verbindungsabschnitt auf, der über einen Booster mit einem Ultraschallgenerator verbunden wird, wobei der Verbindungsabschnitt und die Arbeitsfläche an unterschiedlichen Zeiten des in der Auskehlung positionierten zylindrischen Körpers angeordnet werden. Die Sonotrode wird also nur einseitig gehalten und weist an ihrer der Arbeitsfläche benachbarten Seite ein freies Ende auf.

In einer bevorzugten Weiterbildung werden zwei Sonotroden in Längsrichtung des zylindrischen Körpers gegeneinander versetzt derart angeordnet, dass die Arbeitsfläche der einen Sonotrode auf einer anderen Seite des zylindrischen Körpers angeordnet wird als die Arbeitsfläche der anderen Sonotrode. Ein den zylindrischen Körper überdeckendes Profilblech kann dann mit den beiden Sonotroden gleichzeitig auf beiden Seiten mit einem unten liegenden Werkstück wie z.B. einem Absorberblech verschweißt werden.

Gemäß der Erfindung wird die Sonotrode mit ihrer Rotationsachse in einem Winkel zwischen 45° und 0° zur Oberfläche angeordnet. Damit steht zum einen ausreichend Raum für das Rollnaht-Modul zur Verfügung, zum anderen kann relativ einfach ein Untergreifen des zylindrischen Körpers erfolgen, insbesondere dann, wenn dieser als kreiszylindrischer Körper ausgebildet ist. So kann die Schweißnaht sehr nah am Körper positioniert werden.

Vorzugsweise wird der zylindrische Körper mit wenigstens einem, insbesondere omegaförmigen Profilblech, zumindest abschnittsweise überdeckt, wobei Schenkel des Profilblechs auf der Oberfläche aufliegen und mit dieser verschweißt werden. Dadurch lassen sich die zylindrischen Körper sehr sicher an der Oberfläche befestigen. Das Profilblech und die Oberfläche sollten dabei aus miteinander verschweißbaren Materialen, hergestellt sein. Beispielsweise können das Profilblech und die Oberfläche verschiedene oder gleiche metallische Werkstoffe wie Aluminium oder Kupfer aufweisen.

Bevorzugterweise wird zunächst der eine Schenkel des Profilblechs mittels der einen Sonotrode auf der Oberfläche fixiert und anschließend der andere Schenkel des Profilblechs unter Spannen des Profilblechs mit der anderen Sonotrode auf der Oberfläche fixiert. Der zylindrische Körper wird dann durch das Profilblech an der Oberfläche gehalten. Die Sonotroden können dabei versetzt zueinander angeordnet sein, sodass in axialer Richtung für beide Sonotroden ausreichend Raum zur Verfügung steht.

Dabei ist bevorzugt, dass der zylindrische Körper und gegebenenfalls das Profilblech insbesondere mit einem Niederhalter, wie beispielsweise einer Trapezrolle, gegenüber den Sonotroden zentriert und an der Oberfläche gehalten werden. Damit lassen sich sehr saubere Schweißverbindungen erzeugen. Insbesondere sind durch diese Sonotroden dann nicht so große Halte-Kräfte aufzubringen, sodass diese besser im Hinblick auf die Ultraschallübertragung optimiert werden können.

Bei einer Schweißvorrichtung zur Durchführung eines Verfahrens entsprechend Anspruch 10 ist erfindungsgemäß vorgesehen, dass sie eine rotationssymmetrische Sonotrode aufweist, die derartig ausgebildet ist, dass sie einen zylindrischen Körper kontaktlos übergreifen kann. Dabei kann die Sonotrode beispielsweise über einen Verbindungsabschnitt in der Schweißvorrichtung gehalten sein, wobei sie eine Arbeitsfläche zur Übertragung von Ultraschallschwingungen in eine Fügezone und eine Auskehlung zur zumindest teilweisen Aufnahme eines zylindrischen Bauteils aufweist, die sich auf der Seite zum Verbindungsabschnitt hin an die Arbeitsfläche anschließt. Die Sonotrode ist dabei insbesondere als Rollnaht-Sonotrode ausgebildet.

Durch diese Ausgestaltung ist es möglich, die Schweißnähte sehr nahe an dem zylindrischen Körper zu positionieren, indem der zylindrische Körper übergriffen und die Schweißnaht sozusagen hinter dem zylindrischen Körper erzeugt wird. Damit wird eine beispielsweise von einem Profilblech umschlungene Fläche des zylindrischen Körpers vergrößert und eine feste Einspannsituation erreicht. Auch bei größeren Durchmessern des zylindrischen Körpers ist so eine sichere Befestigung möglich. Die Sonotrode wird dabei bevorzugterweise einseitig befestigt, weist also eine freie Stirnseite auf.

Bevorzugterweise weist die Schweißvorrichtung zwei gegensinnlich angeordnete Sonotroden auf. Der zylindrische Körper kann dadurch unterhalb der Auskehlungen beider Sonotroden angeordnet werden. Beide Sonotroden können dann den zylindrischen Körper von gegenüberliegenden Seiten aus übergreifen, so dass beidseitig des zylindrischen Körpers eine Schweißnaht erzeugt wird. Die Sonotroden sind dabei versetzt zueinander angeordnet, sodass diese sich in Axialrichtung nicht im Wege stehen. Damit lässt sich die Ausbildung zweier paralleler Schweißverbindungen sehr effizient durchführen.

Bevorzugterweise verlaufen die Rotationsachsen der Sonotroden in einem Winkel zwischen 90° und 180° zueinander. Dadurch kann zum einen ausreichend Raum für die Rollnaht-Module vorgesehen werden und zum anderen insbesondere bei einer Ausgestaltung des Körpers als kreiszylindrischer Körper ein Untergreifen erfolgen, sodass ein Abstand der Schweißnähte zueinander gegebenenfalls sogar geringer als ein Durchmesser des Körpers ist.

In einer bevorzugten Weiterbildung weist die Schweißvorrichtung zumindest einen Niederhalter zum Halten des zylindrischen Körpers und gegebenenfalls eines Profilblechs an der Oberfläche auf. Dabei kann auch eine Kombination von Niederhalter und einem Greifer zur Positionierung in Höhe und Richtung verwendet werden. Das Profilblech wird dabei derartig angeordnet, dass es den zylindrischen Körper überdeckt, wobei jeweils ein Schenkel des Profilblechs auf einer Seite des zylindrischen Körpers positioniert wird. Diese Schenkel werden dann mit Hilfe der Schweißvorrichtung mit der Oberfläche des unten liegenden Werkstücks verschweißt. Durch diese Ausgestaltung wird dann eine sichere Anlage und Positionierung des Profilblechs bezüglich der Oberfläche sichergestellt.

Bei der Sonotrode ist erfindungsgemäß vorgesehen, dass sie derartig ausgebildet ist, dass sie einen zylindrischen Körper kontaktlos übergreifen kann. Beispielsweise ist die Sonotrode, die eine Rollnaht-Sonotrode darstellt, rotationssymmetrisch ausgebildet ist und weist eine ringförmige Arbeitsfläche und eine Auskehlung auf, die zwischen einem Verbindungsabschnitt und der Arbeitsfläche angeordnet ist, wobei die Arbeitsfläche an einer Seite in die Auskehlung übergeht, die insbesondere konkav ausgebildet ist und gegebenenfalls von der Arbeitsfläche ausgehend einen sich stetig ändernden Konusradius aufweist, wobei die Arbeitsfläche an ihrer von der Auskehlung abgewandten Seite insbesondere konusförmig in eine freie Stirnseite der Sonotrode übergeht.

Mit einer derartigen Sonotrode ist es möglich, zylindrische Körper kontaktlos zu übergreifen, sodass diese während des Schweißens nicht an der Stirnseite der Sonotroden liegen, sondern unterhalb der Sonotrode in deren Auskehlung. Schweißnähte zum Verbinden eines den zylindrischen Körpers überdeckenden Werkstücks, wie einem Profilblech mit einer darunter liegenden Oberfläche eines zweiten Werkstücks können so sehr nah am zylindrischen Körper positioniert werden. Damit ist eine umschlungene Fläche des zylindrischen Körpers größtmöglich und eine feste Einspannsituation erreichbar, was zu einem bestmöglichen Wärmeübertrag führt.

Durch eine entsprechende Ausgestaltung der Auskehlung können dabei unterschiedlich dimensionierte zylindrische Körper befestigt werden, insbesondere kreiszylindrische Körper mit unterschiedlichen Durchmessern. Dabei kann auch ein Untergreifen erfolgen, sodass gegenüber liegende Schweißnähte in einem geringeren Abstand zueinander sein können als der Durchmesser des zylindrischen Körpers.

Wenn die Sonotrode winklig angeordnet wird, wird die Arbeitsfläche in einem entsprechenden Winkel zur Rotationsachse ausgebildet, sodass ein flächiger Kontakt mit den Werkstücken erreichbar ist.

Die Erfindung wird im Folgenden anhand eines bevorzugten Ausführungsbeispiels in Verbindung mit der Zeichnung näher beschrieben. Hierin zeigen:
- Figur 1: einen Querschnitt durch einen mit einem Profilblech auf einer Oberfläche befestigten zylindrischen Körpers,
- Figur 2: einen Ausschnitt der Sonotrode während des Schweißvorgangs im Querschnitt und
- Figur 3: eine schematische Teilansicht einer Schweißvorrichtung.

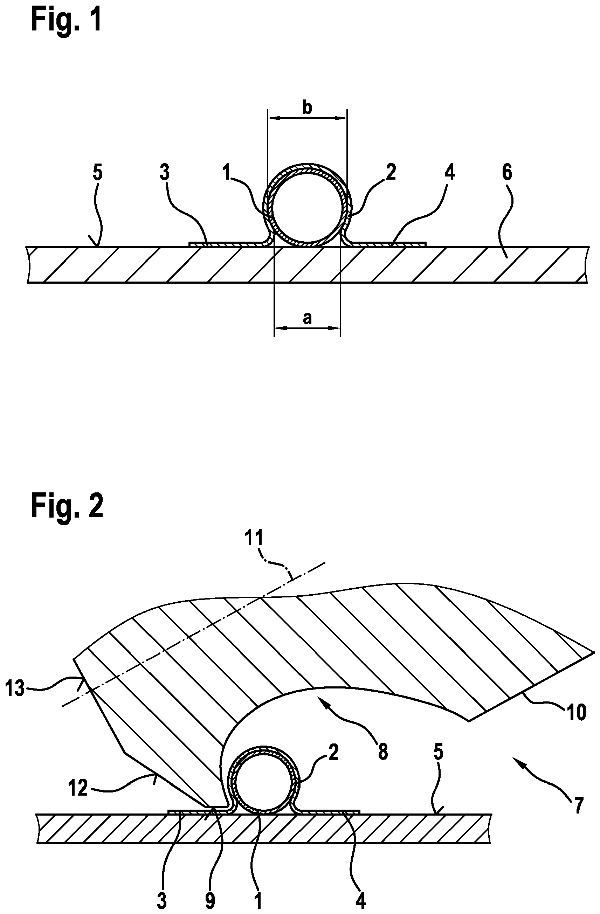

In Figur 1 ist im Querschnitt ein zylindrischer Körper 1 dargestellt, der von einem Profilblech 2, das ein erstes Werkstück darstellt, überdeckt wird. Das Profilblech 2 weist dabei einen omegaförmigen Querschnitt auf und liegt mit Schenkeln 3, 4 auf einer Oberfläche 5 eines zweiten Werkstücks 6 auf, das beispielsweise durch ein Absorberblech gebildet wird. Der zylindrische Körper 1 ist als Rohr ausgebildet. Diese Anordnung findet sich beispielsweise bei thermischen Sonnenkollektoren, wobei durch das Rohr beziehungsweise den zylindrischen Körper 1 Wärmeträger-Flüssigkeit geleitet wird. Zur festen Anbindung des zylindrischen Körpers 1 an der Oberfläche 5 des zweiten Werkstücks 6 werden die Schenkel 3, 4 des Profilblechs 2 in jeweils einer Fügezone mit der Oberfläche 5 verschweißt. Ein Abstand a zwischen den Fügezonen der Schenkel 3, 4 beziehungsweise den möglichen Schweißnähten soll dabei möglichst klein sein, also beispielsweise im Bereich eines Durchmessers b des zylindrischen Körpers 1 liegen.

Zum Erzeugen der Schweißnähte mittels Ultraschallschweißens ist eine rotationssymmetrische Sonotrode 7 vorgesehen, die in Figur 2 ausschnittsweise im Querschnitt gezeigt ist. Die Sonotrode weist eine Auskehlung 8 in Form einer umlaufenden Ringnut auf, in der der zylindrische Körper 1 zumindest teilweise aufgenommen werden kann. Mit der Sonotrode 7 kann so der zylindrische Körper 1 übergriffen werden und eine Arbeitsfläche 9 der Sonotrode 7 an einer anderen Seite des zylindrischen Körpers 1 positioniert sein als ein Verbindungsabschnitt 10 der Sonotrode 7. Selbst bei einer geneigten Anordnung der Sonotrode 7, bei der eine Rotationsachse 11 in einem Winkel zur Oberfläche 5 verläuft, ergibt sich dabei nicht ein vergrößerter Abstand zwischen den Fügezonen der Schenkel 3, 4, sondern eine Verringerung des Abstandes. Die vom Profilblech 2 umschlungene Fläche des zylindrischen Körpers 1 wird damit größer und die Einspannsituation fester.

Die Auskehlung 8 ist gemäß der Erfindung konkav in die Sonotrode eingeformt und weist gemäß der Erfindung einen sich von der Arbeitsfläche 9 ausgehenden, sich stetig ändernden Krümmungsradius auf. Dieser Krümmungsradius nimmt dabei ausgehend von der Arbeitsfläche 9 bei diesem Ausführungsbeispiel ständig zu. Dadurch können zylindrische Körper 1 unterschiedlicher Dimensionen mit der gleichen Sonotrode 7 übergriffen werden, beispielsweise kreiszylindrische Rohre mit Durchmessern zwischen 6 und 24 mm.

Die Arbeitsfläche 9 ist gemäß der Erfindung in einem Winkel zur Rotationsachse 11 ausgeformt, der dem Neigungswinkel der Sonotrode entspricht. Über eine konusförmige Fläche 12 geht die Arbeitsfläche 9 in eine freie Stirnseite 13 über. Die Sonotrode 7 ist also nur einseitig gehalten.

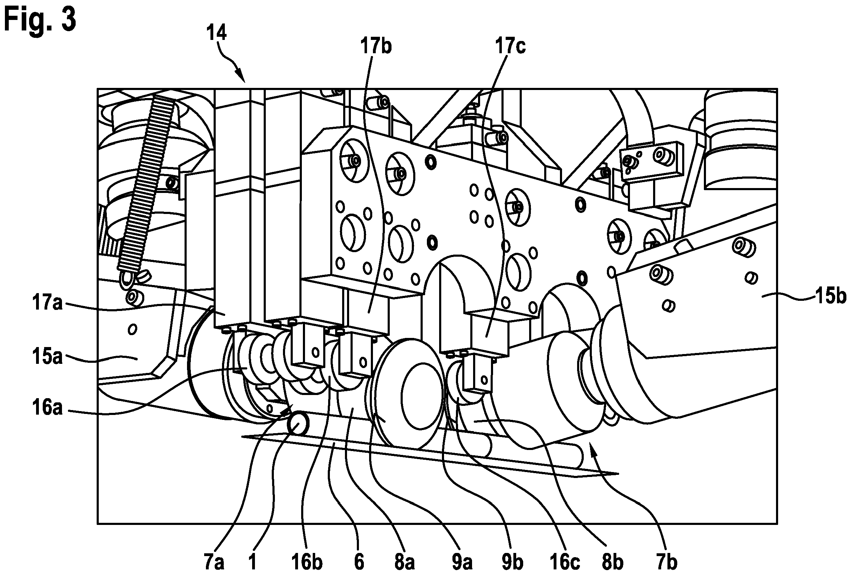

In Figur 3 ist schematisch eine Schweißvorrichtung 1 ausschnittsweise in dreidimensionaler Ansicht dargestellt, die zwei Sonotroden 7a, 7b aufweist, die jeweils in einem Rollnaht-Modul 15a, 15b aufgenommen sind. Ferner weist die Schweißvorrichtung 14 insgesamt drei Niederhalter 16a, 16b, 16c auf, die an Trägern 17a, 17b, 17c vertikal beweglich in der Schweißvorrichtung 14 gelagert sind. Über die Niederhalter 16a, 16b, 16c kann das Profilblech 2 gegen den zylindrischen Körper 1 und die Schenkel 3, 4 auf die Oberfläche 5 des zweiten Werkstücks 6 gedrückt werden, bevor die Schweißnaht erzeugt wird. Dabei ist der Niederhalter 16c zwischen der vorlaufenden Sonotrode 7a und der nachlaufenden Sonotrode 7b angeordnet.

Beide Sonotroden 7a, 7b sind dabei auf einander gegenüber liegenden Seiten des zylindrischen Körpers 1 angeordnet, sodass synchron eine Schweißnaht auf jeder Seite des zylindrischen Körpers 1 erzeugt werden kann, also beide Schenkel 3, 4 fast gleichzeitig mit der Oberfläche 5 des zweiten Werkstücks 6 verbunden werden. Dabei verlaufen Rotationsachsen der versetzt zueinander angeordneten Sonotroden 7a, 7b in einem Winkel zwischen 180° und 135° zueinander. Damit übergreifen die Sonotroden 7a, 7b nicht nur den zylindrischen Körper 1, sondern untergreifen mit ihren Arbeitsflächen 9a, 9b sogar den zylindrischen Körper 1, sodass die Schweißnähte sehr nah zueinander positioniert werden können. Somit wird ein sicheres Umschließen des zylindrischen Körpers 1 mit dem Profilblech 2 erreicht.

Zum Herstellen einer kontinuierlichen Schweißnaht wird die Schweißvorrichtung 14 in Längsrichtung entlang des zylindrischen Körpers 1 geführt, wobei die Sonotroden 7a, 7b rotieren, also auf den Schenkeln abrollen.

Beim Herstellen der Ultraschallschweißverbindung wird der zylindrische Körper und das Profilblech, das insbesondere omegaförmig ausgebildet ist, zunächst durch die Niederhalter 16a, 16b zentriert und niedergehalten. Anschließen erfolgt ein einseitiges Fixieren mittels der vorlaufenden Sonotrode 7a mit anschließendem Umschlingen, Spannen und gleichzeitigem Fixieren der gewonnenen Geometrie mit einer auf den zweiten Schenkel 3 des Profilblechs 2 versetzt nachlaufenden Sonotrode 7b. Das zunächst nur einseitig mit der vorlaufenden Sonotrode auf einem Schenkel 3 fixierte Profilblech 2 wird so mittels der zweiten nachlaufenden Sonotrode 7b gespannt und fixiert.

Erst diese versetzte Anordnung der Sonotroden bietet die Möglichkeit, das Profilblech 2 derart unter Spannung aufzuschweißen, dass eine höchstmögliche Festigkeit der Verbindung, bzw. bei einem thermischen Sonnenkollektor ein bestmöglicher Wärmeübergang erzielt wird.

Um eine Vorpositionierung zu vereinfachen und die Prozesssicherheit zu erhöhen, kann das Profilblech von vornherein omegaförmig ausgebildet sein und insbesondere mittels Formschluss und Klemmwirkung auf das Rohr beziehungsweise den zylindrischen Körper aufgeklippst werden, um so vorpositioniert werden zu können und per Klick sicher gehalten zu sein, bevor die Ultraschallschweißverbindung erzeugt wird.

Mit dem erfindungsgemäßen Verfahren, der erfindungsgemäßen Schweißvorrichtung und der erfindungsgemäßen Sonotrode ist es möglich, Schweißnähte sehr nahe an einem zylindrischen Körper zu erzeugen. Insbesondere können so Rohre, beispielsweise eines thermischen Sonnenkollektors, mit omegaförmigen Profilblechen an der Oberfläche eines Absorberblechs befestigt werden, wobei die Schweißnähte sehr nahe aneinander liegen und insbesondere mit einem geringeren Abstand zu einander angeordnet werden, als ein Durchmesser des Rohres beträgt. Dadurch ergibt sich eine sehr steife Befestigung mit großen Kontaktflächen, die bei thermischen Sonnenkollektoren einen Wirkungsgrad verbessern kann.

## Patentansprüche

1. Sonotrode zur Herstellung einer Ultraschallschweißverbindung zum Befestigen eines zylindrischen Körpers (1) auf einer ebenen Oberfläche (5), wobei die Sonotrode rotationssymmetrisch ausgebildet ist, aufweisend einen Verbindungsabschnitt (10) zum Halten der Sonotrode in einer Schweißvorrichtung, eine ringförmige Arbeitsfläche (9) zur Übertragung von Ultraschallschwingungen in eine Fügezone, ausgeformt in einem Winkel zwischen 45° und 0° zur Rotationsachse (11) der Sonotrode, und eine ringnutförmig umlaufende konkave Auskehlung (8) zur zumindest teilweisen Aufnahme des zylindrischen Körpers die zwischen dem Verbindungsabschnitt (10) und der Arbeitsfläche (9) angeordnet ist,
**dadurch gekennzeichnet, dass**
die Arbeitsfläche (9) an einer Seite in die Auskehlung (8) übergeht, wobei die Auskehlung (8) konkav ausgebildet ist und von der Arbeitsfläche (9) ausgehend einen sich stetig ändernden Krümmungsradius aufweist, wobei die Arbeitsfläche (9) an ihrer von der Auskehlung (8) abgewandten Seite insbesondere konusförmig in eine freie Stirnseite (13) der Sonotrode übergeht.

2. Verfahren zur Herstellung einer Ultraschallschweißverbindung zum Befestigen eines zylindrischen Körpers (1) auf einer ebenen Oberfläche (5) unter Verwendung einer Sonotrode nach Anspruch 1, **dadurch gekennzeichnet, dass** der zylindrische Körper (1) von der Sonotrode (7) kontaktlos übergriffen wird.

3. Verfahren nach Anspruch 2, **dadurch gekennzeichnet, dass** der zylindrische Körper (1) unterhalb der Auskehlung (8) angeordnet wird, die in der Umfangsfiäche der Sonotrode (7) ausgebiidet ist.

4. Verfahren nach Anspruch 2 oder 3, **dadurch gekennzeichnet, dass** die Sonotrode (7) mit einem Verbindungsabschnitt (10) über einen Booster mit einem Ultraschallgenerator verbunden wird, wobei der Verbindungsabschnitt (10) und die Arbeitsfläche (9) an unterschiedlichen Seiten des in der Auskehlung (8) positionierten zylindrischen Körpers (1) angeordnet werden.

5. Verfahren nach einem der Ansprüche 2 bis 4, **dadurch gekennzeichnet, dass** zwei Sonotroden (7a, 7b) in Längsrichtung des zylindrischen Körpers (1) gegeneinander versetzt derart angeordnet werden, dass die Arbeitsfläche (9a) der einen Sonotrode (7a) auf einer anderen Seite des zylindrischen Körpers (1) angeordnet wird als die Arbeitsfläche (9b) der anderen Sonotrode (7b).

6. Verfahren nach einem der Ansprüche 2 bis 5, **dadurch gekennzeichnet, dass** die Sonotrode (7) mit ihrer Rotationsachse (11) in einem Winkel zwischen 45° und 0°-zur Oberfläche (5) angeordnet wird.

7. Verfahren nach einem der Ansprüche 2 bis 6, **dadurch gekennzeichnet, dass** der zylindrische Körper (1) mit wenigstens einem, insbesondere omegaförmigen Profilblech (2) zumindest abschnittsweise überdeckt wird, wobei Schenkel (3, 4) des Profilblechs (2) auf der Oberfläche (5) aufliegen und mit dieser verschweißt werden.

8. Verfahren nach Anspruch 7, **dadurch gekennzeichnet, dass** zunächst der eine Schenkel (3, 4) des Profilblechs (2) mittels der einen Sonotrode (7a) auf der Oberfläche (5) fixiert wird und anschließend der andere Schenkel (4) des Profilblechs (2) unter Spannen des Profilblechs (2) mit der anderen Sonotrode (7b) auf der Oberfläche (5) fixiert wird.

9. Verfahren nach einem der Ansprüche 2 bis 8, **dadurch gekennzeichnet, dass** der zylindrische Körper (1) und gegebenenfalls das Profilblech (2) insbesondere mit mindestens einem Niederhalter (16) gegenüber den Sonotroden (7a, 7b) zentriert und an der Oberfläche (5) gehalten werden.

10. Schweißvorrichtung zur Herstellung einer Ultraschallschweißverbindung zum Befestigen eines zylindrischen Körpers (1) auf einer ebenen Oberfläche (5) unter Durchführung eines Verfahrens nach einem der Ansprüche 3 bis 9, umfassend zumindest wei Sonotroden nach Anspruch 1, wobei die Schweißvorrichtung zwei gegensinnig angeordnete Sonotroden (7a, 7b) aufweist, wobei der zylindrische Körper unterhalb der Auskehlungen (8a, 8b) beider Sonotroden (7a, 7b) anordenbar ist.

11. Schweißvorrichtung nach Anspruch 10, **dadurch gekennzeichnet, dass** die Rotationsachsen der Sonotroden (7a, 7b) in einem Winkel zwischen 90° und 180°, insbesondere zwischen 160° und 170° zueinander verlaufen.

12. Schweißvorrichtung nach Anspruch 10 oder 11, **dadurch gekennzeichnet, dass** sie zumindest einen Niederhalter (16) zum Halten des zylindrischen Körpers (1) und gegebenenfalls eines Profilblechs (2) an der Oberfläche (5) aufweist.

## Claims

1. Sonotrode for establishing an ultrasonic welded connection for fastening a cylindrical body (1) on a planar surface (5), wherein the sonotrode is of rotationally symmetrical design, having a connecting section (10) for holding the sonotrode in a welding apparatus, an annular working surface (9) for transmitting ultrasonic vibrations in a joining zone, formed at an angle of between 45° and 0° in relation to the rotation axis (11) of the sonotrode, and a concave channel (8), which encircles in the form of an annular groove, for at least partially receiving the cylindrical body, which channel is arranged between the connecting section (10) and the working surface (9),
**characterized in that**
the working surface (9) merges with the channel (8) on one side, wherein the channel (8) is of concave design and has, starting from the working surface (9), a continuously changing radius of curvature, wherein the working surface (9), at its side which is averted from the channel (8), merges, in particular in a conical manner, with a free end side (13) of the sonotrode.

2. Method for establishing an ultrasonic welded connection for fastening a cylindrical body (1) on a planar surface (5) using a sonotrode according to Claim 1, **characterized in that** the sonotrode (7) engages over the cylindrical body (1) in a contact-free manner.

3. Method according to Claim 2, **characterized in that** the cylindrical body (1) is arranged below the channel (8) which is formed in the circumferential surface of the sonotrode (7) .

4. Method according to Claim 2 or 3, **characterized in that** the sonotrode (7) is connected by way of a connecting section (10) to an ultrasound generator via a booster, wherein the connecting section (10) and the working surface (9) are arranged on different sides of the cylindrical body (1) which is positioned in the channel (8) .

5. Method according to one of Claims 2 to 4, **characterized in that** two sonotrodes (7a, 7b) are arranged offset in relation to one another in the longitudinal direction of the cylindrical body (1) in such a way that the working surface (9a) of one sonotrode (7a) is arranged on a different side of the cylindrical body (1) than the working surface (9b) of the other sonotrode (7b).

6. Method according to one of Claims 2 to 5, **characterized in that** the sonotrode (7), by way of its rotation axis (11), is arranged at an angle of between 45° and 0° in relation to the surface (5).

7. Method according to one of Claims 2 to 6, **characterized in that** the cylindrical body (1) is covered by at least one, in particular omega-shaped, profiled metal sheet (2) at least in sections, wherein limbs (3, 4) of the profiled metal sheet (2) rest on the surface (5) and are welded to this surface.

8. Method according to Claim 7, **characterized in that** initially one limb (3, 4) of the profiled metal sheet (2) is fixed on the surface (5) by means of one sonotrode (7a), and then the other limb (4) of the profiled metal sheet (2) is fixed on the surface (5) with clamping of the profiled metal sheet (2) to the other sonotrode (7b).

9. Method according to one of Claims 2 to 8, **characterized in that** the cylindrical body (1) and possibly the profiled metal sheet (2) are centred in relation to the sonotrodes (7a, 7b) and held on the surface (5) in particular by way of at least one holding-down device (16).

10. Welding apparatus for establishing an ultrasonic welded connection for fastening a cylindrical body (1) on a planar surface (5) by carrying out a method according to one of Claims 3 to 9, comprising at least two sonotrodes according to Claim 1, wherein the welding apparatus has two sonotrodes (7a, 7b) which are arranged in opposite directions, wherein the cylindrical body can be arranged below the channels (8a, 8b) of the two sonotrodes (7a, 7b).

11. Welding apparatus according to Claim 10, **characterized in that** the rotation axes of the sonotrodes (7a, 7b) run at an angle of between 90° and 180°, in particular of between 160° and 170°, in relation to one another.

12. Welding apparatus according to Claim 10 or 11, **characterized in that** it has at least one holding-down device (16) for holding the cylindrical body (1) and possibly a profiled metal sheet (2) on the surface (5).

## Revendications

1. Sonotrode permettant de réaliser une soudure par ultrasons pour fixer un corps cylindrique (1) à une surface plane (5), la sonotrode étant réalisée à symétrie de révolution, présentant une partie de liaison (10) pour maintenir la sonotrode dans un dispositif de soudage, une surface de travail annulaire (9) pour transmettre des vibrations ultrasonores dans une zone de jonction formée selon un angle compris entre 45° et 0° par rapport à l'axe de rotation (11) de la sonotrode, et une gorge concave périphérique (8) en forme de rainure annulaire pour recevoir au moins en partie le corps cylindrique et qui est disposée entre la partie de liaison (10) et la surface de travail (9),
**caractérisée en ce que** la surface de travail (9) passe à la gorge (8) sur un côté, la gorge (8) étant réalisée de manière concave et présentant un rayon de courbure variable en continu en partant de la surface de travail (9), la surface de travail (9) passant, en particulier en forme de cône, sur son côté détourné de la gorge (8) à une face frontale libre (13) de la sonotrode.

2. Procédé de réalisation d'une soudure par ultrasons pour fixer un corps cylindrique (1) à une surface plane (5) en utilisant une sonotrode selon la revendication 1, **caractérisé en ce que** le corps cylindrique (1) est recouvert sans contact par la sonotrode (7).

3. Procédé selon la revendication 2, **caractérisé en ce que** le corps cylindrique (1) est disposé au-dessous de la gorge (8) qui est réalisée dans la surface circonférentielle de la sonotrode (7).

4. Procédé selon la revendication 2 ou 3, **caractérisé en ce que** la sonotrode (7) est reliée à un générateur d'ultrasons par une partie de liaison (10) par l'intermédiaire d'un booster, la partie de liaison (10) et la surface de travail (9) étant disposées sur différents côtés du corps cylindrique (1) positionné dans la gorge (8).

5. Procédé selon l'une quelconque des revendications 2 à 4, **caractérisé en ce que** deux sonotrodes (7a, 7b) sont disposées dans la direction longitudinale du corps cylindrique (1) en décalage l'une par rapport à l'autre de telle sorte que la surface de travail (9a) de ladite une sonotrode (7a) est disposée sur un autre côté du corps cylindrique (1) que la surface de travail (9b) de l'autre sonotrode (7b).

6. Procédé selon l'une quelconque des revendications 2 à 5, **caractérisé en ce que** la sonotrode (7) est disposée avec son axe de rotation (11) selon un angle compris entre 45° et 0° par rapport à la surface (5).

7. Procédé selon l'une quelconque des revendications 2 à 6, **caractérisé en ce que** le corps cylindrique (1) est couvert au moins par endroits par au moins une tôle profilée (2), en particulier en forme d'oméga, dans lequel les branches (3, 4) de la tôle profilée (2) reposent sur la surface (5) et sont soudées à celle-ci.

8. Procédé selon la revendication 7, **caractérisé en ce que** d'abord ladite une branche (3, 4) de la tôle profilée (2) est fixée au moyen de ladite une sonotrode (7a) à la surface (5) et ensuite l'autre branche (4) de la tôle profilée (2) est fixée à l'autre sonotrode (7b) à la surface (5) en mettant sous tension la tôle profilée (2).

9. Procédé selon l'une quelconque des revendications 2 à 8, **caractérisé en ce que** le corps cylindrique (1) et le cas échéant la tôle profilée (2) sont centrés et maintenus au niveau de la surface (5), en particulier par au moins un serre-flan (16), par rapport aux sonotrodes (7a, 7b).

10. Dispositif de soudage pour réaliser une soudure par ultrasons pour fixer un corps cylindrique (1) à une surface plane (5) en exécutant un procédé selon l'une quelconque des revendications 3 à 9, comprenant au moins deux sonotrodes selon la revendication 1, le dispositif de soudage présentant deux sonotrodes (7a, 7b) disposées en sens opposé, le corps cylindrique pouvant être disposé au-dessous des gorges (8a, 8b) des deux sonotrodes (7a, 7b).

11. Dispositif de soudage selon la revendication 10, **caractérisé en ce que** les axes de rotation des sonotrodes (7a, 7b) s'étendent l'un par rapport à l'autre selon un angle compris entre 90° et 180°, en particulier entre 160° et 170°.

12. Dispositif de soudage selon la revendication 10 ou 11, **caractérisé en ce qu'**il présente au moins un serre-flan (16) pour maintenir le corps cylindrique (1) et le cas échéant une tôle profilée (2) au niveau de la surface (5).
